Europäisches Patentamt

European Patent Office

Office européen des brevets

(11) Veröffentlichungsnummer: **0 089 450**

**A2**

(12) **EUROPÄISCHE PATENTANMELDUNG**

(21) Anmeldenummer: 82890184.3

(51) Int. Cl.³: **B 23 D 25/06**

(22) Anmeldetag: 15.12.82

(30) Priorität: 23.03.82 AT 1120/82

(43) Veröffentlichungstag der Anmeldung:
28.09.83 Patentblatt 83/39

(84) Benannte Vertragsstaaten:
BE CH DE FR GB IT LI NL

(71) Anmelder: VOEST-ALPINE Aktiengesellschaft
Werksgelände
A-4010 Linz(AT)

(72) Erfinder:
Die Erfinder haben auf ihre Nennung verzichtet

(74) Vertreter: Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7
A-4020 Linz(AT)

(54) Vorrichtung zum Querteilen bewegter Blechbänder.

(57) Eine Vorrichtung zum Querteilen bewegter Blechbänder besteht aus einem auf einer Kurbelwelle (2) gelagerten Schwingrahmen (1), der an einem im Abstand von der Kurbelwelle (2) am Schwingrahmen (1) angelenkten, quer zur Kurbelwelle (2) verlaufenden Lenker (6) abgestützt ist, und aus einem im Schwingrahmen (1) verschiebbar geführten, durch einen Schubkurbeltrieb (3, 4) antreibbaren, mit einem rahmenfesten Gegenmesser (11) zusammenwirkenden Messer (12).

Um die Schnittgeschwindigkeit unabhängig von der Bandgeschwindigkeit wählen zu können, ist der am Schwingrahmen (1) angelenkte Lenker (6) ortsfest gelagert, wobei für den Schwingrahmen (1) und den Schubkurbeltrieb (3, 4) je für sich antreibbare Kurbelwellen (2, 3) vorgesehen sind.

FIG.1

i atentanwälte
Dipl.- Ing. Gerhard Hübscher
Dipl.- Ing. Helmut Hübscher
Dipl.- Ing. Heiner Hübscher
A-4020 Linz, Spittelwiese 7

0089450

- 1 -

## Vorrichtung zum Querteilen bewegter Blechbänder

Die Erfindung bezieht sich auf eine Vorrichtung zum Querteilen bewegter Blechbänder, bestehend aus einem auf einer Kurbelwelle gelagerten Schwingrahmen, der an einem mit Abstand von der Kurbelwelle am Schwingrahmen angelenkten, quer zur Kurbelwelle verlaufenden Lenker abgestützt ist, und aus einem im Schwingrahmen verschiebbar geführten, durch einen Schubkurbeltrieb antreibbaren, mit einem rahmenfesten Gegenmesser zusammenwirkenden Messer.

Bei einer bekannten Vorrichtung dieser Art (DE-OS 30 36 621) wird der Schwingrahmen über die Kurbelwelle gehoben und gesenkt und gleichzeitig über den am Schwingrahmen angelenkten Lenker von einem Kurbeltrieb her hin- und hergehend angetrieben, so daß das rahmenfeste Messer nicht nur gegen das zu schneidende Blechband abgesenkt, sondern auch in der Laufrichtung des Blechbandes während der Schnittbewegung mitbewegt wird. Das im Schwingrahmen verschiebbar geführte Messer wird dabei durch eine winkelversetzte Kurbel der Kurbelwelle für den Schwingrahmen gegensinnig angetrieben und das Blechband während seiner Bewegung geschnitten. Nachteilig bei diesen bekannten Vorrichtungen ist zunächst, daß die Schnittgeschwindigkeit von der Schwenkgeschwindigkeit des Schwingrahmens und damit von der Durchlaufgeschwindigkeit des zu schneidenden Werkstückes abhängt, weil zur Abstimmung der Messerbewegung auf die Schwenkbewegung des Schwingrahmens die Kurbelwelle für den Schwingrahmen und der Kurbeltrieb für die Schwenkbewegung des Schwingrahmens gekoppelt sein müssen. Diese Koppelung, die beispielsweise durch eine Antriebsverbindung hergestellt wird, läßt wiederum den Einsatz einer solchen Vorrichtung für das Schneiden unbewegter Blechbänder nicht zu, wenn nicht zwischen den beiden Antrieben eine Phasenverschiebung erreicht wird, die eine angenähert geradlinige Auf- und Abbewegung des Schwingrahmens ermöglicht. Zu diesem Zweck muß der Kurbeltrieb für die Schwenkbewegung des Schwingrahmens gegenüber der Kurbelwelle des Schwingrahmens verdreht werden, was den durch den gesonderten Schwenkantrieb bereits erheblichen Konstruktionsaufwand noch durch eine entsprechende Kupplungseinrichtung vermehrt. Abgesehen davon ist die für einen Schnitt zu bewegende Masse vergleichsweise groß, so daß entsprechend dimensionierte Antriebe vorgesehen werden müssen.

Der Erfindung liegt somit die Aufgabe zugrunde, diese Mängel zu vermeiden und eine Vorrichtung zum Querteilen bewegter Blechbänder der eingangs geschilderten Art so zu verbessern, daß mit einfachen konstruktiven Mitteln die Schnittgeschwindigkeit unabhängig von der Durchlaufgeschwindigkeit des Bandes gewählt werden kann und eine problemlose Umstellung auf Schnitte bei nicht bewegtem Band gewährleistet wird. Außerdem soll eine einfache Abstimmung der Schwenkbewegung des Schwingrahmens auf die Anstellung des rahmenfesten Gegenmessers an das zu teilende Blechband sichergestellt werden.

Die Erfindung löst die gestellte Aufgabe dadurch, daß der am Schwingrahmen angelenkte Lenker ortsfest gelagert ist und daß für den Schwingrahmen und den Schubkurbeltrieb je für sich antreibbare Kurbelwellen vorgesehen sind.

. Durch die ortsfeste Lagerung des am Schwingrahmen angelenkten Lenkers wird der Schwingrahmen durch die Kurbelwelle für die Auf- und Abbewegung auch schwingend angetrieben, wobei die Schwingweite und damit auch die Geschwindigkeit der Schwenkbewegung vom Abstand der Lenkeranlenkung am Schwingrahmen von der Kurbelwellenachse abhängt. Diese zwangsweise Koppelung des Schwenkantriebes mit der Auf- und Abbewegung des Schwingrahmens bringt zwar den Vorteil einer einfachen Konstruktion ohne zusätzlichen Schwenkantrieb mit sich, doch kann diese Maßnahme allein die Nachteile der bekannten Konstruktionen hinsichtlich der Abhängigkeit der Schnittgeschwindigkeit vom Schwingrahmenantrieb nicht vermeiden. Erst durch die erfindungsgemäße Trennung der Antriebe für den Schwingrahmen und für die am beweglichen Messer angreifende Schubkurbel kann eine gegenüber der Schwingrahmenbewegung hohe Schnittgeschwindigkeit gewährleistet werden, die während des Schnittes eine geringere Änderung des von der Schwenklage des Schwingrahmens abhängigen Anstellwinkels des Messers und damit sauberere Schnittkanten zur Folge hat. Da über den Schubkurbeltrieb lediglich das verschiebbar im Schwingrahmen geführte Messer angetrieben wird, bleiben die vom Schubkurbeltrieb zu beschleunigenden Massen vergleichsweise klein, so daß mit geringeren Antriebsleistungen höhere Schnittgeschwindigkeiten erreicht werden können.

Obwohl eine koaxiale Anordnung der Kurbelwellen für den Schwingrahmen und für den Schubkurbeltrieb nicht erforderlich wäre, ergeben sich durch eine solche koaxiale Kurbelwellenanordnung besonders einfache und platzsparende Konstruktionsverhältnisse, insbesondere dann, wenn die hohl ausgebildete Kurbelwelle für den Schwingrahmen auf der Kurbelwelle des Schubkurbeltriebes gelagert ist.

Da die durch den Schubkurbeltrieb für das verschiebbar im Schwingrahmen geführte Messer zu beschleunigenden Massen vergleichsweise klein sind, wird es in weiterer Ausbildung der Erfindung möglich, die Kurbelwelle des Schubkurbeltriebes über ein Schwungrad und eine Kupplung anzutreiben. Ein solcher Antrieb hat den bedeutenden Vorteil, daß mit einem Motor vergleichbar kleiner Leistung das Auslangen gefunden werden kann, weil dieser Motor ständig laufen kann und die im Schwungrad gespeicherte Energie bei der Kupplung der Kurbelwelle mit dem Schwungrad die Beschleunigung des beweglichen Messers für die Schnittbewegung unterstützt. Mit Hilfe einer mit der Kupplung kombinierten Bremse kann das bewegliche Messer nach dem Schnitt wieder in einer gewünschten Lage festgehalten werden.

Durch den gesonderten Antrieb der Kurbelwellen für den Schwingrahmen und für den Schubkurbeltrieb werden somit für den Schnitt besonders günstige Verhältnisse geschaffen, die auch ein einfaches Umstellen auf das Teilen unbewegter Bänder zulassen. Nach dem Anstellen des rahmenfesten Gegenmessers an das ruhende Band über eine entsprechende Schwingrahmenbewegung kann bei stehendem Schwingrahmen der Schnitt über das für sich antreibbare, im Schwingrahmen verschiebbar geführte Messer ohne Relativbewegung des Schwingrahmens gegenüber dem Band durchgeführt werden.

In der Zeichnung ist der Erfindungsgegenstand beispielsweise dargestellt. Es zeigen

Fig. 1 eine erfindungsgemäße Vorrichtung zum Querteilen bewegter Blechbänder in einem schematischen Längsschnitt,

Fig. 2 diese Vorrichtung in einem Querschnitt,

Fig. 3 eine konstruktive Ausführung einer erfindungsgemäßen Vorrichtung in Ansicht von vorne,

Fig. 4 einen Schnitt nach der Linie IV-IV der Fig. 3 in einem größeren Maßstab,

Fig. 5 die Anordnung der Kurbelwellen für den Schwingrahmen und den Schubkurbeltrieb für das bewegliche Messer in einem Axialschnitt in einem größeren Maßstab und

Fig. 6 einen Querschnitt durch die Führung des beweglichen Messers im Schwingrahmen.

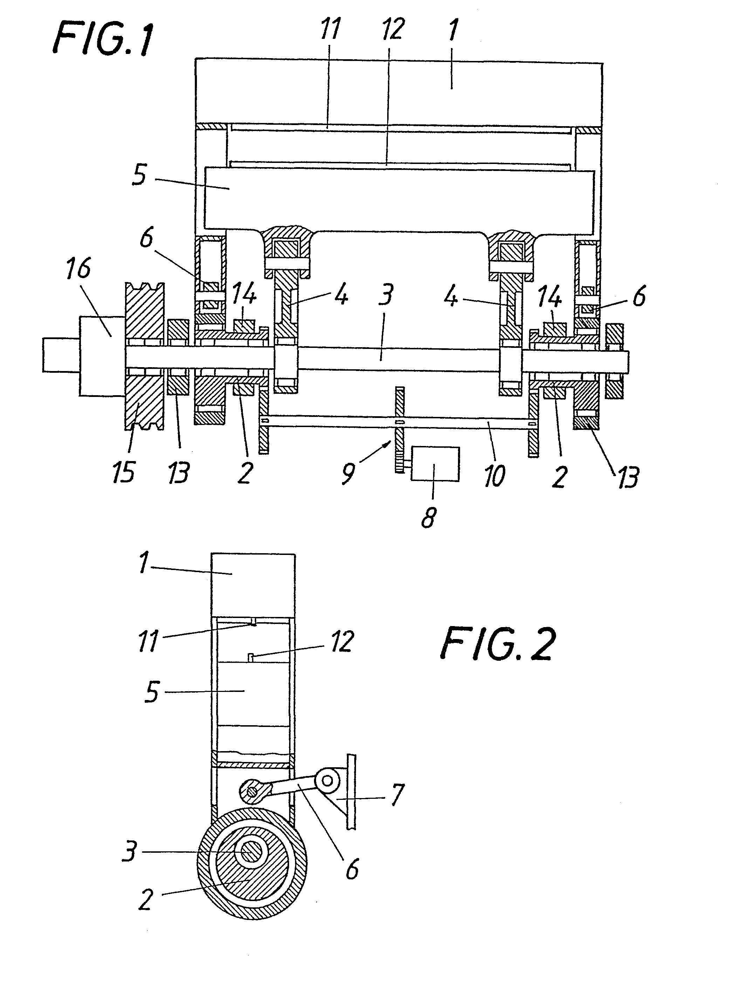

Wie insbesondere der schematischen Darstellung nach den Fig. 1 und 2 entnommen werden kann, ist der Schwingrahmen 1 einer Vorrichtung zum Querteilen bewegter Blechbänder auf einer Kurbelwelle 2 gelagert, die aus zwei hohlen Teilstücken besteht und drehbar auf einer Kurbelwelle 3 gelagert ist, die über Schubstangen 4 einen im Schwingrahmen 1 verschiebbar geführten Messerbalken 5 antreibt. Der Schwingrahmen 1 wird dabei durch einen mit Abstand von der Kurbelwelle 2 am Schwingrahmen 1 angelenkten Lenker 6 geführt, der in einem ortsfesten Lager 7 schwenkbar gehalten ist. Wird die Kurbelwelle 2 durch einen Motor 8 angetrieben, der über ein Getriebe 9 und eine Verbindungswelle 10 mit den beiden Teilstücken 2 der Kurbelwelle in Verbindung steht, so wird der Schwingrahmen 1 durch die Kurbelwelle 2 nicht nur gehoben und gesenkt, sondern auch auf Grund der Führung durch den Lenker 6 hin- und hergeschwenkt, so daß das rahmenfeste Gegenmesser 11 nicht nur an das durch den Schwingrahmen 1 durchlaufende Blechband angestellt, sondern auch mit dem bewegten Blechband in dessen Bewegungsrichtung mitbewegt wird. Während dieser gleichsinnigen Bewegung des angestellten Gegenmessers 11 und des Bandes wird der Messerbalken 5 mit dem Messer 12 über den aus der Kurbelwelle 3 und den Schubstangen 4 bestehenden Schubkurbeltrieb gegenüber dem Schwingrahmen 1 verschoben und der gewünschte Schnitt durchgeführt, wonach das Messer 12 vom Schubkurbeltrieb 3, 4 zurückgezogen und das Gegenmesser 11 durch den Rahmen vom geschnittenen Band abgehoben und in die Ausgangslage zurückgeschwenkt wird. Die vom Schwingrahmenantrieb unabhängige Antriebsmöglichkeit des Messers 12 bietet dabei den entscheidenden Vorteil, daß die Schnittgeschwindigkeit für sich unabhängig von der Banddurchlaufgeschwindigkeit gewählt werden kann. Die Kurbelwelle 3 des Schubkurbeltriebes, die mit Hilfe von Lagern 13 und 14 in einem Gestell gelagert ist, wobei die Lager 14 die auf der Kurbelwelle 3 gelagerten Teilstücke der Kurbelwelle 2 umfassen, wird von einem Schwungrad 15 her angetrieben,
das frei drehbar auf der Kurbelwelle 3 sitzt und mit
dieser über eine Kupplung 16 verbunden werden kann.
Diese Kupplung 16 ist dabei so ausgebildet, daß die
Kurbelwelle 3 bei einer Entkupplung vom Schwungrad
abgebremst wird.

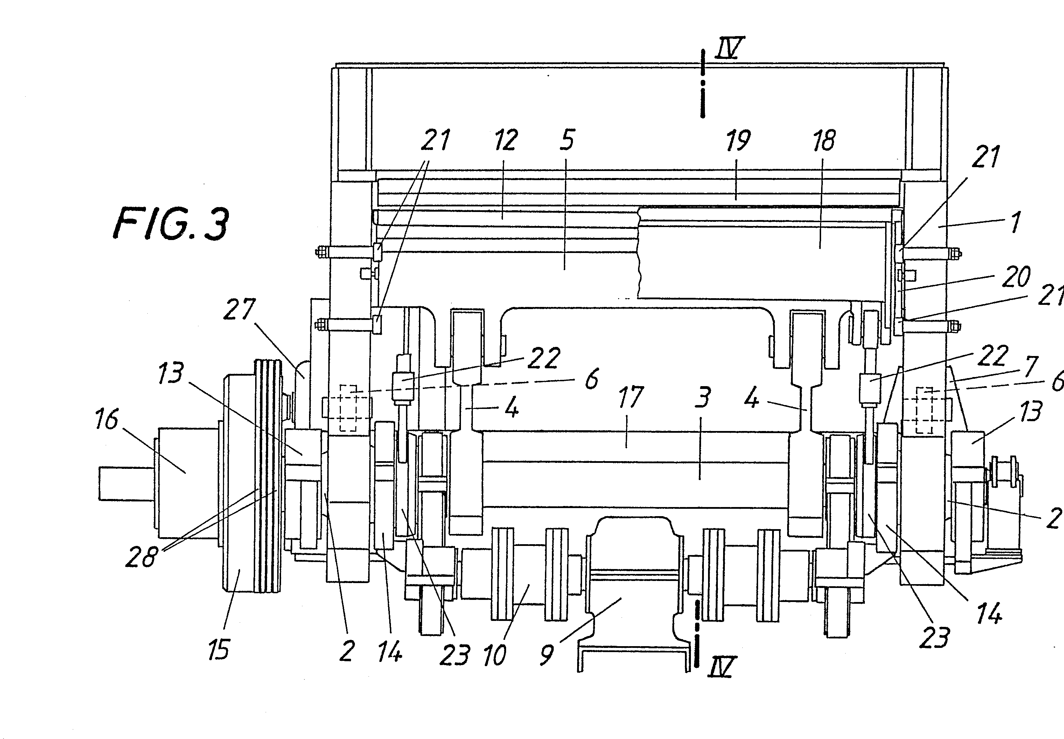

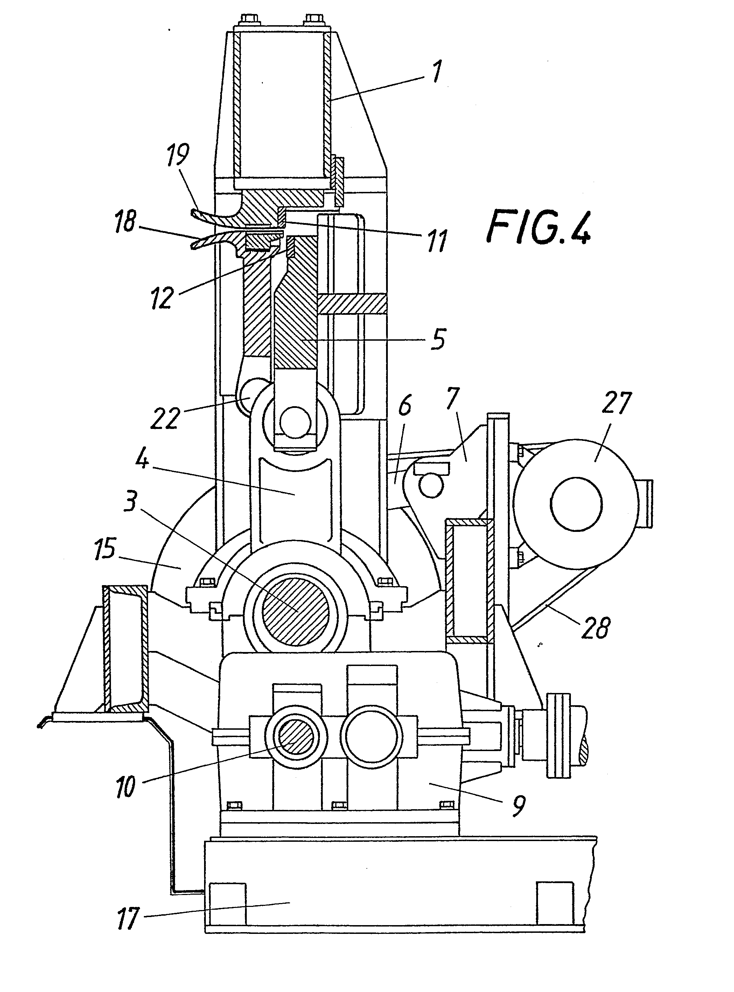

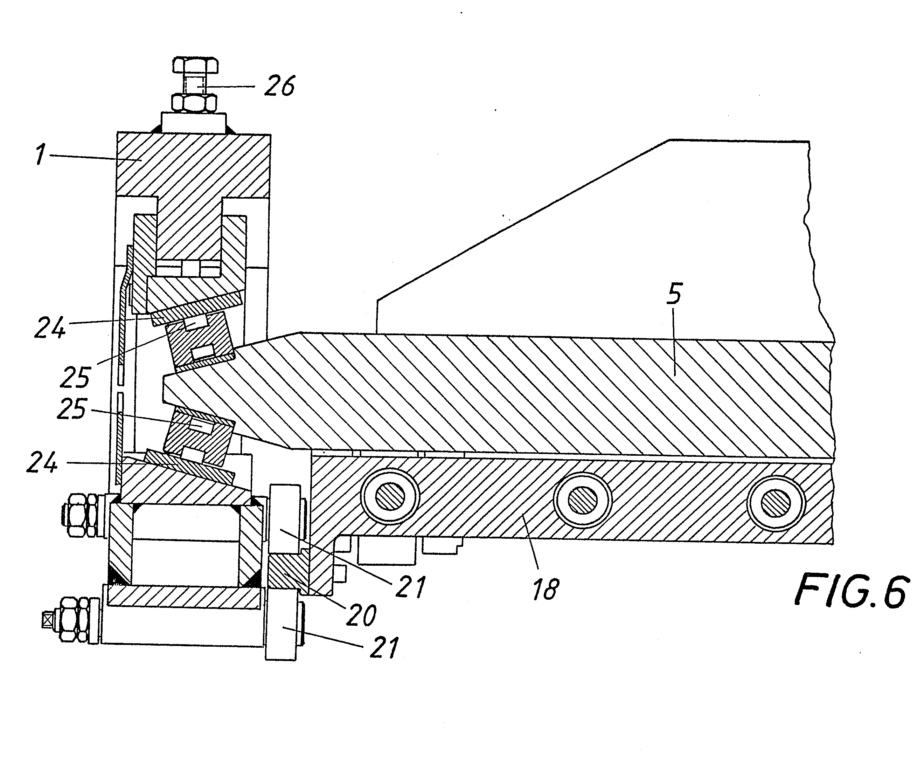

Wie insbesondere die Fig. 3 und 4 zeigen, ist
bei der konstruktiven Ausführung einer erfindungsgemäßen Vorrichtung ein Gestell 17 vorgesehen, auf dem
die einzelnen Konstruktionsteile gelagert sind. Im
Schwingrahmen 1 ist nicht nur der für sich antreibbare,
mit den Schubstangen 4 des Schubkurbeltriebes verbundene
Messerbalken 5 verschiebbar geführt, sondern auch ein
Blechhalter 18, der mit einem rahmenfesten Gegenhalter 19
zusammenwirkt. Dieser Blechhalter 18 weist seitliche
Führungsleisten 20 auf, die zwischen Führungsrollen 21
greifen, wie dies insbesondere der Fig. 6 entnommen
werden kann. Zum Antrieb dieses Blechhalters 18 dient
ein Schubstangenpaar 22, das auf den Teilstücken der
Kurbelwelle 2 mit Hilfe von Lagern 23 gelagert ist und
den Blechhalter 18 beim Absinken des Schwingrahmens
während der Anstellbewegung festhält, so daß der
Blechhalter 18 das Blechband von unten gegen den Gegenhalter 19 drückt. Das zu schneidende Blechband wird
folglich im Schnittbereich schnittgerecht gespannt.

Zur Führung des Messerbalkens 5 im Schwingrahmen 1
weist der Schwingrahmen 1 zu beiden Seiten des Messerbalkens 5 zwei Führungsbahnen 24 auf, auf denen Rollen
25 des Messerbalkens 5 abrollen. Da die Führungsbahnen
24 durch einen Stelltrieb, beispielsweise einen Schraubentrieb 26, in ihrem Abstand voneinander eingestellt werden
können, ist eine weitgehend spielfreie Führung des Messerbalkens 5 im Schwingrahmen 1 möglich, was die Schnittqualität selbstverständlich beeinflußt.

Zum Antrieb des Schwungrades 15 dient ein Motor 27, der am Gestell 17 angeflanscht ist und über Keilriemen 28 mit dem Schwungrad 15 in Antriebsverbindung steht. Da über den Motor 27 lediglich der Messerbalken 5 mit dem Messer 12 angetrieben werden muß, bleibt die zu beschleunigende Masse vergleichsweise klein, so daß über das Schwungrad 15 eine hohe Beschleunigung und damit ein rascher Schnitt sichergestellt werden kann, und zwar bei vergleichsweise kleiner Motorleistung. Der Motor 27 kann ja kontinuierlich laufen.

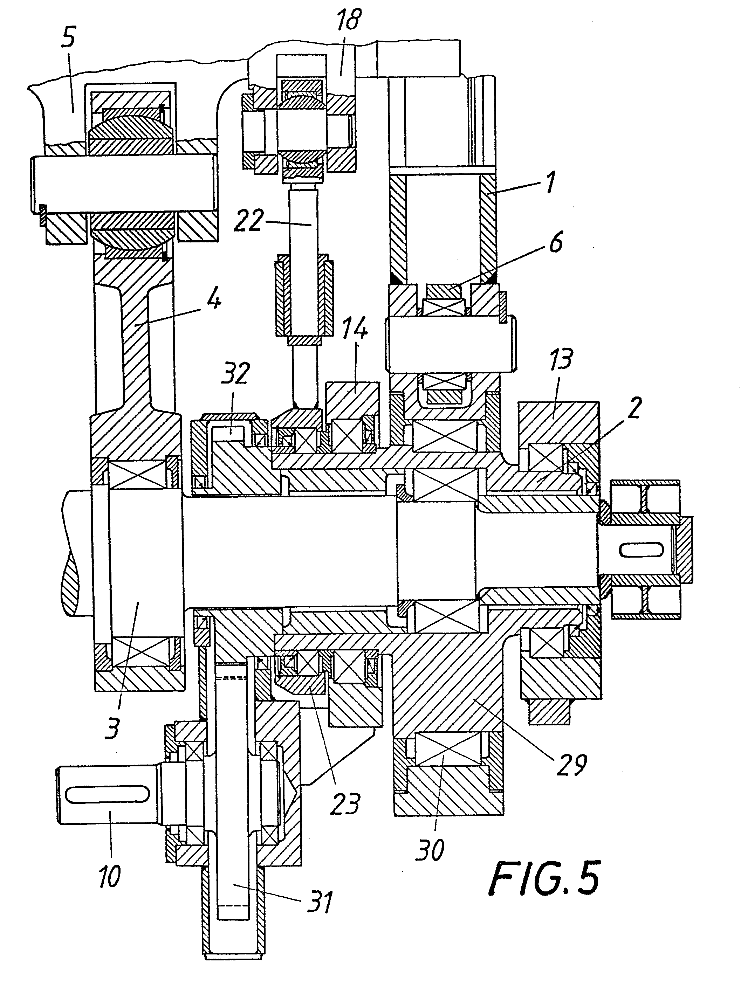

In der Fig. 5 ist die Lagerung eines Teilstückes der Kurbelwelle 2 für den Schwingrahmen 1 auf der Kurbelwelle 3 für den Antrieb des Messerbalkens 5 näher dargestellt. Die Kurbel der Kurbelwelle 2 wird durch einen Exzenter 29 gebildet, auf dem der Schwingrahmen 1 über Lager 30 abgestützt ist. Der Antrieb der Kurbelwelle 2 erfolgt von der Verbindungswelle 10 her über ein Zahnrad 31, das mit einem Gegenrad 32 kämmt. Dieses Gegenrad 32 ist drehfest mit der Kurbelwelle 2 verbunden, die in den Lagern 13 und 14 gegenüber dem Gestell abgestützt ist und die Lager für die Kurbelwelle 3 trägt. Es ergibt sich somit eine sehr kompakte Bauweise, die allen Verhältnissen Rechnung trägt.

- 8 -

Patentansprüche :

1.      Vorrichtung zum Querteilen bewegter Blechbänder, bestehend aus einem auf einer Kurbelwelle (2) gelagerten Schwingrahmen (1), der an einem mit Abstand von der Kurbelwelle (2) am Schwingrahmen (1) angelenkten, quer zur Kurbelwelle (2) verlaufenden Lenker (6) abgestützt ist, und aus einem im Schwingrahmen (1) verschiebbar geführten, durch einen Schubkurbeltrieb (3, 4) antreibbaren, mit einem rahmenfesten Gegenmesser (11) zusammenwirkenden Messer (12), dadurch gekennzeichnet, daß der am Schwingrahmen (1) angelenkte Lenker (6) ortsfest gelagert ist und daß für den Schwingrahmen (1) und den Schubkurbeltrieb (3, 4) je für sich antreibbare Kurbelwellen (2, 3) vorgesehen sind.

2.      Vorrichtung nach Anspruch 1, dadurch gekennzeichnet, daß die hohl ausgebildete Kurbelwelle (2) für den Schwingrahmen (1) auf der Kurbelwelle (3) des Schubkurbeltriebes (3, 4) gelagert ist.

3.      Vorrichtung nach Anspruch 1 oder 2, dadurch gekennzeichnet, daß die Kurbelwelle (3) des Schubkurbeltriebes (3, 4) über ein Schwungrad (15) und eine Kupplung (16) antreibbar ist.

**FIG.1**

**FIG.2**

FIG.3

4/5

0089450

FIG.4

FIG.5

0089450

FIG.6